# EUROPÄISCHE PATENTSCHRIFT

(11) **EP 2 497 964 B1**
(45) Veröffentlichungstag und Bekanntmachung des Hinweises auf die Patenterteilung: **18.04.2018**
(21) Anmeldenummer: 12154204.7
(22) Anmeldetag: 07.02.2012
(51) Int. Cl.: F16B 37/08

(54) **Befestigungsanordnung**
Mounting assembly
Agencement de fixation

(30) Priorität: 11.03.2011 DE 102011005405
(43) Veröffentlichungstag der Anmeldung: 12.09.2012
(73) Patentinhaber: HILTI Aktiengesellschaft, 9494 Schaan (LI)
(72) Erfinder: Wiedner, Christoph, 6800 Feldkirch (AT); Mueller, Manuel, 7324 Vilters (CH)
(74) Vertreter: Hilti Aktiengesellschaft Corporate Intellectual Property

(56) Entgegenhaltungen:
- WO-A1-2010/089894
- US-A- 3 675 530
- US-A1- 2010 166 525

## Beschreibung

Die Erfindung betrifft eine Befestigungsanordnung gemäss dem Oberbegriff des Anspruchs 1 mit einer Schnellspannmutter, welche zwei Mutternteile aufweist, wobei die Mutternteile jeweils eine Nut zur Aufnahme einer Gewindestange aufweisen, und einem Sicherungskörper mit zumindest einer Durchgangsöffnung zum Sichern der Schnellspannmutter an der Gewindestange, wobei der Sicherungskörper in der Durchgangsöffnung eine Sicherungsfläche zum Anpressen der Mutternteile an die Gewindestange sowie eine Zentrierfläche zum Zentrieren der Gewindestange in der Durchgangsöffnung aufweist, wobei der Sicherungskörper in der Durchgangsöffnung eine Übergangsfläche aufweist, die sich an die Sicherungsfläche und an die Zentrierfläche anschliesst, und die zwischen der Sicherungsfläche und der Zentrierfläche verläuft.

Beispielsweise auf dem Gebiet der Installationstechnik sind als Alternative zu Standardmuttern Schnellspannmuttern bekannt, die aus mehreren Teilen bestehen, welche an der Gewindestange zusammengeführt und gesichert werden. Deren Vorteil liegt in der Tatsache, dass sie nicht vom Ende der Gewindestange her aufgedreht werden müssen, sondern dass sie unmittelbar an beliebiger Stelle auf der Gewindestange befestigt werden können. Sie können insbesondere bei der Herstellung von mehrlagigen Abhängungen sowie für die nachträgliche Montage einer zusätzlichen Installationsebene in einer vorhandenen Abhängung zum Einsatz kommen.

Eine mehrteilige Schnellspannmutter ist beispielsweise aus der EP 1 016 797 A2 bekannt. Die EP 1 016 797 A2 lehrt, als Schnellspannmutter eine fast vollständig durchtrennte Standardmutter zu verwenden, welche sich über den nach dem Schlitzen verbliebenen Steg unter plastischer Deformation im Bereich des Steges öffnen lässt. Nach dem Öffnen kann die Mutter an beliebiger Stelle über die Gewindestange gehalten werden und die Mutternteile können sodann plastisch zurückgebogen werden.

Eine weitere mehrteilige Schnellspannmutter geht beispielsweise aus der DE 10 2006 035 404 B4 hervor. Gemäss DE 10 2006 035 404 B4 werden zwei vollständig getrennte Mutternteile durch eine Feder miteinander federnd verbunden.

Zum Sichern mehrteiliger Schnellspannmuttern ist häufig ein Sicherungskörper mit einer Durchgangsöffnung erforderlich (z.B. ein kreisförmiges Loch in der Schiene oder im Anbindeteil), welche die geschlitzte Mutter ringförmig umschliesst und so vor einem ungewollten Öffnen unter Last schützt. Ein solcher Sicherungskörper ist beispielsweise in der US 4,083,288 A gezeigt. Gemäss der US 4,083,288 A ist der Sicherungskörper scheibenförmig ausgebildet und weist eine Durchgangsöffnung mit einer zylindrischen Zentrierfläche, durch welche die Gewindestange hindurchführbar ist, und einer konischen Sicherungsfläche auf, welche die beiden Mutternteile sichert.

Eine weitere schnell anbringbare Mutter geht aus der DE 19904293 A hervor. Unter http://www.tnb.com/shared/docs/kd_1_g_trapnut.pdf wird eine vierteilige Anordnung aus zwei geschlitzten Blechplatten mit Halbgewinden, einem Niet und einem Sicherungsstift beschrieben. Die Anordnung wird im geöffneten Zustand an beliebiger Stelle an die Gewindestange gehalten und scherenartig geschlossen. Sodann wird der Sicherungsstift mit der Zange eingequetscht, die Anordnung an die gewünschte Position gedreht und mit einer Rohrzange festgezogen. Unter http://www.cooperbline.com/pdf/Flyers/BA193S.pdf ist eine Lösung mit Mutter und Platte beschrieben, die ineinander verpresst, aber noch zueinander drehbar sind, und jeweils ein Halbgewinde und eine Öffnung für die Gewindestange aufweisen. Die Anordnung wird im geöffneten Zustand, d.h. wenn die Öffnung an Mutter und Platte in gleicher Richtung orientiert sind, an beliebiger Stelle an die Gewindestange gehalten. Sodann wird die Anordnung durch Verdrehen von Mutter und Platte geschlossen und festgezogen.

Die US 2010166525 A1 beschreibt eine Mutternanordnung mit einer Fangmutter mit einer glattwandigen Bohrung, durch die eine Gewindestange hindurchläuft. Die Fangmutter weist einen Napf mit einer inneren Verjüngung auf. Die Mutternanordnung weist ferner eine Spannmutter mit einer Oberfläche auf, die zum verjüngenden Napf der Fangmutter passt. Die Spannmutter greift das Gewinde der Gewindestange, dies jedoch erst nachdem die Spannmutter an die Fangmutter herangeführt wurde. Somit ist es nicht erforderlich, die Mutternanordnung entlang der gesamten Gewindelänge der Gewindestange zu schrauben.

Aufgabe der Erfindung ist es, eine Befestigungsanordnung mit einer mehrteiligen Schnellspannmutter und einem Sicherungskörper anzugeben, die bei einfacher Handhabung und geringen Herstellungskosten besonders zuverlässig in der Anwendung ist.

Die Aufgabe wird erfindungsgemäss durch eine Befestigungsanordnung mit den Merkmalen des Anspruchs 1 gelöst. Bevorzugte Ausführungsformen sind in den abhängigen Ansprüchen angegeben.

Eine erfindungsgemässe Befestigungsanordnung ist dadurch gekennzeichnet, dass die Schnellspannmutter zumindest eine Anschlagfläche aufweist, welche ein axiales Einziehen der Schnellspannmutter in die Durchgangsöffnung begrenzt, und dass die Übergangsfläche von den Mutternteilen beabstandet ist, wenn die Schnellspannmutter mit der Anschlagfläche am Sicherungskörper anliegt und die Sicherungsfläche die Mutternteile an die Gewindestange anpresst.

Bei einer erfindungsgemässen Befestigungsanordnung ist unter anderem vorgesehen, dass der Sicherungskörper in der Durchgangsöffnung eine Übergangsfläche aufweist, die sich an die Sicherungsfläche und an die Zentrierfläche anschliesst, und die zwischen der Sicherungsfläche und der Zentrierfläche verläuft.

Ein Grundgedanke der Erfindung liegt darin, in der Durchgangsöffnung eine weitere funktionale Fläche, die Übergangsfläche, vorzusehen, die in Radialrichtung und/oder Axialrichtung (bezogen jeweils auf die Längsachse der Durchgangsöffnung und/oder die Längsachse der Gewindestange) zwischen der Zentrierfläche und der Sicherungsfläche liegt. Die Erfindung hat erkannt, dass eine besonders gute Sicherungswirkung für die beiden Mutternteile dadurch erzielt werden kann, dass die Sicherungsfläche mit einem sehr kleinen Öffnungswinkel, also nahezu zylindrisch ausführt wird. Denn in diesem Fall wirkt die Sicherungsfläche nahezu radial auf die Mutternteile, so dass eine besonders gute Verpresswirkung mit der Gewindestange erzielt wird. Ferner hat die Erfindung aber erkannt, dass es vorteilhaft ist, wenn die Durchgangsöffnung die Gewindestange an der Zentrierfläche möglichst nahe umgibt, weil hierdurch sichergestellt werden kann, dass die Mutter zuverlässig in die Durchgangsöffnung gezogen wird, ohne zu verkanten und/oder am Rand der Durchgangsöffnung aufzusitzen. Denn der Sicherungskörper kann in der Regel nur dann wie vorgesehen wirken, wenn sich die Mutter in der Durchgangsöffnung befindet, nicht hingegen, wenn die Mutter am Rand der Durchgangsöffnung aufsitzt. Daher ist eine gute Zentrierung der Gewindestange und damit der Mutter gewünscht. Die erfindungsgemäss vorgesehene Übergangsfläche ermöglicht es nun, beide genannten Effekte vorteilhaft zu kombinieren. Da erfindungsgemäss die Sicherungsfläche und die Zentrierfläche nicht aneinander angrenzen, sondern durch die Übergangsfläche voneinander getrennt sind, kann einerseits die Zentrierfläche für ein besonders zuverlässiges Einziehen der Mutter besonders nahe an die Gewindestange herangeführt werden, zugleich kann aber die Sicherungsfläche für eine besonders gute Anpresswirkung steil, das heisst mit einem kleine Öffnungswinkel, ausgeführt werden.

Erfindungsgemäss ist die Durchgangsöffnung im Sicherungskörper der Geometrie der Mutter angepasst, wodurch gewährleistet ist, dass die Mutter im Sicherungskörper gesichert wird. Die Nuten in den beiden Mutternteilen weisen zweckmässigerweise jeweils zumindest einen Gewindegang auf, der mit dem Gewinde der Gewindestange korrespondiert. Die Gewindestange kann beispielsweise auch bolzenförmig ausgebildet sein und zumindest einen Kopf aufweisen. Die beiden Mutternteile sind nach der Erfindung relativ zueinander beweglich, damit die Mutter zum radialen Aufschieben auf die Gewindestange geöffnet und sodann wieder geschlossen werden kann. Die Gewindestange kann als Teil der erfindungsgemässen Befestigungsanordnung, aber auch als separates Teil angesehen werden.

Besonders bevorzugt ist es, dass die Sicherungsfläche, die Übergangsfläche und/oder die Zentrierfläche ringsegmentförmig oder ringförmig ausgebildet sind. Hierdurch kann eine besonders gute Krafteinleitung in die Mutter bzw. eine besonders gute Führung der Gewindestange gewährleistet werden. Sofern der Sicherungskörper einen in die Durchgangsöffnung reichenden Schlitz zum Einführen der Gewindestange in die Durchgangsöffnung aufweist, sind die genannten Flächen zweckmässigerweise ringsegmentförmig mit einer Unterbrechung am Schlitz ausgebildet. Ist kein Schlitz vorhanden, so können die Flächen ringförmig ausgeführt sein.

Weiterhin ist es erfindungsgemäss, dass die Sicherungsfläche zumindest bereichsweise einen kleineren Öffnungswinkel aufweist als die Übergangsfläche. Hierdurch kann die Krafteinleitung weiter verbessert werden. Unter dem Öffnungswinkel kann insbesondere ein Winkel verstanden werden, den zwei radial (bezogen auf die Längsachse der Durchgangsöffnung) gegenüberliegende Bereiche der jeweiligen Flächen miteinander einschliessen. Zwischen der Sicherungsfläche und der Übergangsfläche kann eine Kante ausgebildet sein. Die beiden Flächen können aber grundsätzlich auch kontinuierlich ineinander übergehen. Beispielsweise kann der Öffnungswinkel der Sicherungsfläche kleiner 20°, kleiner 10° oder kleiner 5° sein. Er kann insbesondere zumindest annähernd 0° betragen. Der Öffnungswinkel der Übergangsfläche kann beispielsweise zwischen 60° und 120° liegen.

Nach der Erfindung ist vorgesehen, dass die Schnellspannmutter zumindest eine Anschlagfläche aufweist, welche ein axiales Einziehen der Schnellspannmutter in die Durchgangsöffnung begrenzt. Hierdurch kann gewährleistet werden, dass die Mutter auch bei besonders grossen Axiallasten zuverlässig gesichert wird. Die Anschlagfläche ist als radial verlaufende Ebene ausgebildet, welche die Sicherungsfläche umgibt, und welche am Sicherungskörper anliegt, wenn die Mutter bestimmungsgemäss im Sicherungskörper aufgenommen ist. Hierdurch kann eine konstruktiv besonders einfache Ausführung gegeben sein.

Nach der Erfindung ist ferner vorgesehen, dass die Übergangsfläche von den Mutternteilen beabstandet ist, wenn die Schnellspannmutter mit der Anschlagfläche am Sicherungskörper anliegt und die Sicherungsfläche die Mutternteile an die Gewindestange anpresst. Gemäss diesem Erfindungsaspekt wirkt bei der bestimmungsgemässen Anwendung der erfindungsgemässen Anordnung lediglich die nahezu zylindrische Sicherungsfläche auf die Mutternhälften, nicht hingegen die mit einem grösseren Öffnungswinkel ausgeführte Übergangsfläche. Damit kann gewährleistet werden, dass auch bei vollständig in die Durchgangsöffnung eingezogener Mutter die Sicherungswirkung des Sicherungskörpers vorwiegend in radialer Richtung erfolgt, während die Axialkomponente klein bleibt, so dass eine besonders gute Sicherungswirkung aufrechterhalten wird. Die Anschlagfläche ist so an der Mutter positioniert, dass sie einen Kontakt der Übergangsfläche mit der Mutter, insbesondere mit einem Kragen der Mutter, verhindert, wenn die Sicherungsfläche die Mutternteile an der Gewindestange sichert.

Weiterhin ist es zweckmässig, dass die Mutternteile für einen Angriff der Sicherungsfläche jeweils zumindest einen Kragen aufweisen. Ein solcher Kragen, der zweckmässigerweise an der Anschlagfläche der Mutter angeordnet ist, ermöglicht eine besonders gute Anpresswirkung der Sicherungsfläche und damit eine besonders gute Sicherungswirkung bei kompakten Abmessungen. Für eine besonders gleichmässige Krafteinleitung können die Kragen jeweils ringsegmentförmig ausgeführt sein.

Soweit ein Kragen vorgesehen ist, ist es besonders bevorzugt, dass der zumindest eine Kragen eine Kontaktfläche für einen Kontakt mit der Sicherungsfläche des Sicherungskörpers sowie eine winklig zur Kontaktfläche angeordnete Positionierungsfläche aufweist. Die Positionierungsfläche weist dabei einen grösseren Öffnungswinkel auf als die Kontaktfläche, so dass die Positionierungsfläche als Einfädelhilfe beim Einbringen der Mutter in die Durchgangsöffnung dienen kann. Die Kontaktfläche und die Positionierungsfläche sind zweckmässigerweise ringsegmentförmig, insbesondere konussegmentförmig ausgebildet.

Eine weitere vorteilhafte Weiterbildung besteht darin, dass die Mutternteile jeweils zwei Kragen aufweisen, die auf gegenüberliegenden Seiten des jeweiligen Mutternteils angeordnet sind. Gemäss dieser Ausführungsform ist an jedem Mutternteil ein oberer Kragen und auf der gegenüberliegenden Seite ein unterer Kragen vorgesehen. Hierdurch ist gewährleistet, dass die Mutter unabhängig von der Montagerichtung zuverlässig gesichert werden kann, so dass der Installateur die Montagerichtung nicht beachten muss und damit eine besonders schnelle Installation möglich ist.

Besonders bevorzugt ist es, dass der Sicherungskörper einen Schlitz aufweist, der zum Einführen der Gewindestange in die Durchgangsöffnung von der Aussenseite des Sicherungskörpers in die Durchgangsöffnung reicht. Durch eine solche geschlitzte Ausführung wird ein Aufschieben des Sicherungskörpers längs der Gewindestange entbehrlich und der Sicherungskörper kann an jeder Stelle der Gewindestange seitlich eingebracht werden, selbst wenn sich längs der Gewindestange bereits Installationen befinden sollten.

In einer besonders einfachen Ausführungsform kann der Sicherungskörper plattenförmig, zum Beispiel als Unterlegscheibe ausgeführt sein. Der Sicherungskörper kann auch mehrere Durchgangsöffnungen aufweisen. Beispielsweise kann der Sicherungskörper zumindest zwei erfindungsgemäss ausgebildete Durchgangsöffnungen aufweisen, die zum Durchführen der Gewindestange durch die beiden Durchgangsöffnungen miteinander fluchten. In diesem Fall kann mittels zweier Schnellspannmuttern eine Verbindung zwischen Gewindestange und Sicherungskörper realisiert werden, die sowohl auf Zug als auch auf Druck belastet werden kann. Der Sicherungskörper kann vorzugsweise U-förmig ausgeführt sein, so dass er eine Profilschiene umgreifen kann, wobei dann in den beiden gegenüberliegenden Schenkeln des Sicherungskörpers jeweils eine Durchgangsöffnung mit Schnellspannmutter angeordnet sein kann.

Demgemäss ist es besonders vorteilhaft, dass der Sicherungskörper eine weitere Durchgangsöffnung zum Sichern einer weiteren Schnellspannmutter mit zwei Mutternteilen an der Gewindestange aufweist, wobei vorzugsweise die Durchgangsöffnung und die weitere Durchgangsöffnung miteinander fluchten. Insbesondere damit für beide Durchgangsöffnungen derselbe Mutterntyp verwendet werden kann, kann vorgesehen sein, dass die Sicherungsflächen, die Zentrierflächen und/oder die Übergangsflächen der beiden Durchgangsöffnungen zumindest annähernd identisch bemasst sind. Zweckmässigerweise sind die Kontaktflächen der beiden Durchgangsöffnungen, welche den engsten Querschnitt bilden, einander zugewandt, so dass sich beide Durchgangsöffnungen nach aussen hin aufweiten, und/oder die beiden Durchgangsöffnungen spiegelsymmetrisch zueinander ausgeführt. Dies erlaubt eine besonders einfache Montage beider Muttern auf der Aussenseite des Sicherungskörpers.

Eine besonders einfache Montage kann dadurch gewährleistet werden, dass die beiden Mutternteile gelenkig miteinander verbunden sind, vorzugsweise um zumindest eine längs der Nuten verlaufende Gelenkachse. Hierzu kann beispielsweise ein Gelenksteg vorgesehen sein, welcher die beiden Mutternteile miteinander verbindet, und welcher plastisch deformierbar ist. Vorzugsweise ist dieser Gelenksteg so dimensioniert, dass die Mutternteile von Hand an die Gewindestange angedrückt und geschlossen werden können, und dass zugleich die Möglichkeit der Wiederverwendung gegeben ist.

Die Erfindung umfasst auch eine erfindungsgemässe Befestigungsanordnung, die eine Gewindestange aufweist, die durch die Durchgangsöffnung durchgeführt ist, wobei der Sicherungskörper mit seiner Sicherungsfläche die beiden Mutternteile radial an die Gewindestange anpresst.

Die Erfindung wird nachfolgend anhand bevorzugter Ausführungsbeispiele näher erläutert, die schematisch in den beiliegenden Figuren dargestellt sind. In den Figuren zeigen:
- Figur 1:: eine grob schematische Seitenansicht eines Sicherungskörpers einer erfindungsgemässen Befestigungsanordnung;
- Figur 2:: eine grob schematische Draufsicht des Sicherungskörpers aus Figur 1;
- Figur 3:: eine teilweise geschnittene Vorderansicht einer Befestigungsanordnung mit dem Sicherungskörper aus Figur 1;
- Figur 4:: die Detailansicht B aus Figur 3 bei nur teilweise eingezogener Mutter;
- Figur 5:: die Detailansicht B aus Figur 3 bei vollständig eingezogener Mutter; und
- Figuren 6 und 7:: Ansichten analog Figuren 3 und 4 zur Verdeutlichung der Wirkung der Positionierungsfläche des Mutternkragens bei schräg verlaufender Gewindestange.

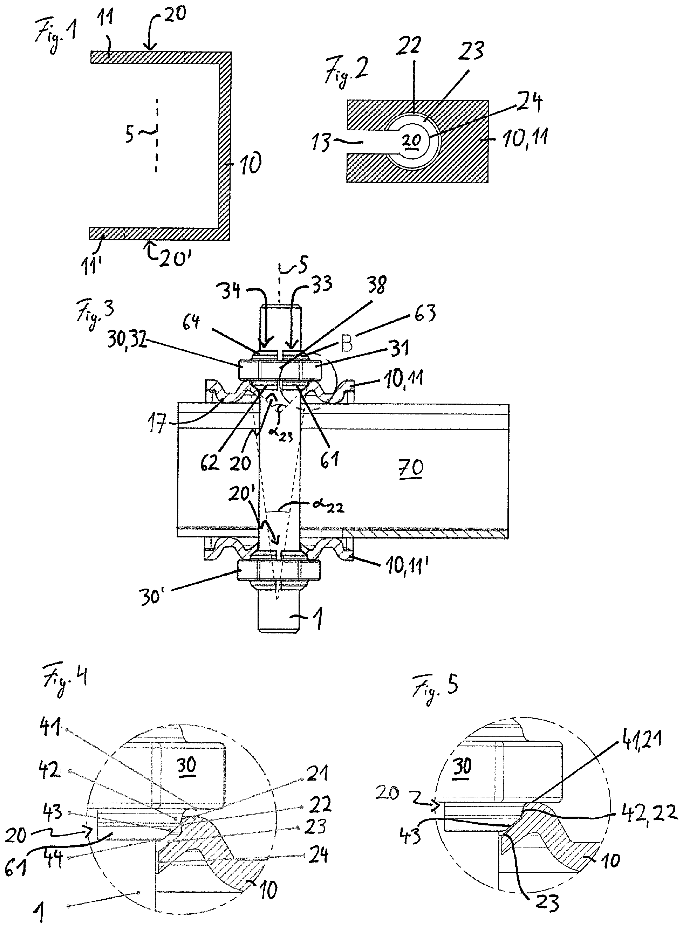

Die Figuren 1 bis 5 zeigen eine Ausführungsform einer erfindungsgemässen Befestigungsanordnung, wobei die Figuren 1 und 2 der Übersichtlichkeit halber weniger Details als die übrigen Figuren wiedergeben. Wie insbesondere die Figuren 1 und 3 zeigen, weist die Befestigungsanordnung einen Sicherungskörper 10 auf, der im dargestellten Ausführungsbeispiel als U-förmiger Bügel ausgeführt ist und zwei Schenkel 11 und 11' aufweist, in denen jeweils eine Durchgangsöffnung 20 bzw. 20' für eine Gewindestange 1 ausgebildet ist. Wie lediglich Figur 3 zeigt, umgreift der Sicherungskörper 10 mit seinen Schenkeln 11 und 11' eine Schiene 70. Die beiden Durchgangsöffnungen 20 und 20' sind zur Aufnahme ein und derselben Gewindestange 1 fluchtend angeordnet und weisen somit eine gemeinsame Längsache 5 auf, die in den Figuren nur angedeutet ist. Wie unter anderem Figur 3 zeigt, sind die beiden Schenkel 11 und 11' und/oder die beiden Durchgangsöffnungen 20 und 20' spiegelsymmetrisch zu einer senkrecht zur Längsachse 5 verlaufenden Spiegelebene ausgebildet. Im Folgenden wird daher nur der erste Schenkel 11 und die erste Durchgangsöffnung 20 im Detail beschrieben. Die jeweils zweiten Elemente sind analog ausgebildet.

Wie Figur 2 zeigt, weist der Sicherungskörper 10 im Schenkel 11 einen Schlitz 13 auf, der sich von der Aussenseite des Sicherungskörpers 10 in die Durchgangsöffnung 20 erstreckt. Dieser Schlitz erlaubt es, den Sicherungskörper 10 radial zur Längsachse 5 auf die Gewindestange 1 aufzuschieben, wobei die Gewindestange 1 durch den Schlitz 13 in die Durchgangsöffnung 20 gelangt. Wie in Figur 3 erkennbar ist, ist der Sicherungskörper 10 im Bereich der Durchgangsöffnung 20 mit Sicken 17 versehen, die zur Versteifung dienen.

Wie die Figuren 3 bis 5 zeigen, weist die Befestigungsanordnung ferner zwei Schnellspannmuttern 30 und 30' auf, wobei die Schnellspannmutter 30 in der ersten Durchgangsöffnung 20 und die zweite Schnellspannmutter 30' in der zweiten Durchgangsöffnung 20' angeordnet ist. Die beiden Schnellspannmuttern 30 und 30' sind im Wesentlichen identisch ausgeführt, so dass im Folgenden nur die erste Schnellspannmutter 30 im Detail beschrieben wird.

Wie insbesondere Figur 3 zeigt, weist die Schnellspannmutter 30, die aussenseitig mit einem Mehrkant, beispielsweise einem Sechskant ausgebildet ist, zwei Mutternteile 31 und 32 auf, in denen jeweils eine Nut 33 bzw. 34 vorgesehen ist. Die Nuten 33 und 34 dienen zur Aufnahme der Gewindestange 1 und weisen jeweils einen mit der Gewindestange 1 korrespondierenden Innengewindeabschnitt auf. Die beiden Mutternteile 31 und 32 sind über einen plastisch verformbaren Steg 38 schwenkbar miteinander verbunden. Der plastisch verformbare Steg 38 ermöglicht es, die beiden Mutternteile 31, 32 aus einer gespreizten Position, in der sie radial auf die Gewindestange 1 aufgeschoben werden können, so zusammenzubiegen, dass ihre Innengewindeabschnitte in einen Formschluss mit dem Aussengewinde der Gewindestange 1 gelangen und die Mutter 30 dann längs der Gewindestange 1 festliegt.

Um zu verhindern, dass sich die beiden Mutternteile 31 und 32 ungewollt wieder aufspreizen und die Gewindestange 1 freigeben, wird die Mutter 30 bereichsweise in die Durchgangsöffnung 20 eingebracht, beispielsweise durch Anziehen der Mutter 30 oder durch Zug an der Gewindestange 1. Wie weiter unten noch im Detail erläutert wird, werden die Mutternteile 31 und 32 in der Durchgangsöffnung 20 von der Wand des Sicherungskörpers 10 radial gesichert, so dass ein Aufspreizen in der Regel nicht mehr möglich ist. Damit die übermassige Mutter 30 in die Durchgangsöffnung 20 eingebracht werden kann, sind die beiden Mutternteile 31 und 32 an ihrer Unterseite jeweils mit einem ringsegmentförmigen Kragen 61 bzw. 62 versehen, wobei diese Kragen 61 und 62 von der Durchgangsöffnung 20 aufgenommen werden können.

Damit die Mutter 30 beidseitig in die Durchgangsöffnung 20 eingesetzt werden kann, weist die Mutter 30 auch auf Ihrer Oberseite Kragen 63 und 64 auf. Diese oberen Kragen 63 und 64 sind spiegelsymmetrisch zu den unteren Kragen 61 bzw. 62 ausgebildet. Daher werden nachfolgend nur die unteren Kragen 61 und 62 im Detail erläutert.

Wie insbesondere Figur 4 zeigt, weist die radial aussen liegende Wand der Kragen 61, 62 zwei unterschiedlich stark schräg gestellte Bereiche auf, nämlich die Kontaktfläche 42 und die Positionierungsfläche 43, wobei sich die Positionierungsfläche 43 an die Kontaktfläche 42 anschliesst und axial weiter aussen liegt als die Kontaktfläche 42. Auf der der Positionierungsfläche 43 abgewanden Seite der Kontaktfläche 42 schliesst sich an die Kontaktfläche 42 eine im Wesentlichen radial verlaufende Anschlagfläche 41 an. Diese Anschlagfläche 41 begrenzt eine axiale Bewegung der in der Durchgangsöffnung 20 aufgenommen Mutter 30 relativ zum Sicherungskörper 10. Insbesondere kann die koaxial zur Durchgangsöffnung 20 angeordnete Mutter 30 so weit axial in die Durchgangsöffnung 20 eingeschoben werden, bis, wie in Figur 5 gezeigt, die Anschlagfläche 41 an einer Auflagefläche 21 des Sicherungskörpers 10 aufliegt, welche die Durchgangsöffnung 20 umgibt.

Die Kontaktfläche 42 ist für einen Kontakt mit einer Sicherungsfläche 22 des Sicherungskörpers 10 vorgesehen. Sie weist eine nur geringe Abweichung von der Längsrichtung der Nuten 33, 34, d.h. von der Richtung der Längsachse 5 der hierin eingelegten Gewindestange 1 auf, so dass über eine Keilwirkung an der Sicherungsfläche 22 des Sicherungskörpers 10 eine grosse Radialkraft auf die Mutter 30 wirken kann, welche die Mutternteile 31, 32 sicher an die Gewindestange 1 anpresst. Dabei können die Durchmesser von Sicherungsfläche 22 und Kontaktfläche 42 vorzugsweise so aufeinander abgestimmt werden, dass beim Eindrehen der Mutter 30 ein Kontakt zwischen diesen Flächen 22 und 42 besteht und der Sicherungskörper 10 an der oberen Kante der Sicherungsfläche 22 sogar leicht aufgeweitet wird, bis das weitere Eindrehen der Mutter 30 durch Aufliegen der Anschlagfläche 41 auf der Auflagefläche 21 gestoppt wird, was durch einen starken Anstieg des Anzugsmoments erkennbar ist.

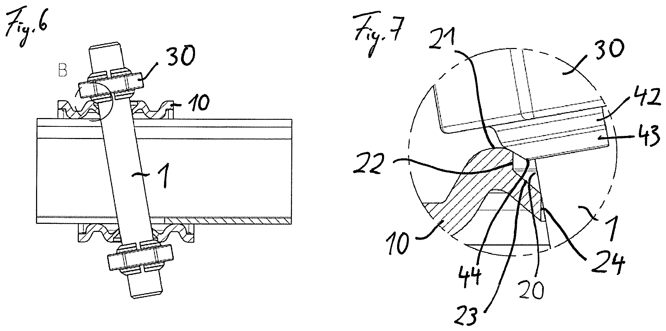

Die Positionierungsfläche 43 weist im Vergleich zur Kontaktfläche 42 eine grössere Abweichung von der Längsrichtung der Nuten 33, 34, d.h. von der Richtung der Längsachse 5 der Gewindestange 1 auf, und besitzt somit einen grösseren Öffnungswinkel. Wie insbesondere die Figuren 6 und 7 zeigen, erleichtert die Positionierungsfläche 43 das Einfädeln der Mutter 30 in die Durchgangsöffnung 20, insbesondere auch dann, wenn die Gewindestange 1 gegenüber der Durchgangsöffnung 20 verkippt ist.

In der Regel wird es fertigungstechnisch nicht zu vermeiden sein, dass die Positionierungsfläche 43 wie insbesondere in Figur 4 gezeigt in einen verrundeten Ende, der Bundkrone 44, ausläuft. Diese Bundkrone 44 kann insoweit ein Fehlfunktionsrisiko in sich bergen, als dass sie bei verkippter und/oder nicht zentrierter Gewindestange 1 potenziell auf der Auflagefläche 21 des Sicherungskörpers 10 zu liegen kommen kann. In diesem Fall würde die nicht geneigte Spitze der Bundkrone 44 auf der ebenfalls nicht geneigten Auflagefläche 21 des Sicherungskörpers 10 aufsitzen und die Mutter 30 würde sich nicht in die Durchgangsöffnung 20 des Sicherungskörpers 10 einfädeln. Dies wiederum kann unter Umständen dazu führen, dass die Mutternteile 31, 32 nicht hinreichend vor dem Aufspreizen unter Last gesichert sind, was unter Umständen zu einem Versagen führen kann.

Um diese Fehlfunktion zu vermeiden, weist der Sicherungskörper 10 wie insbesondere in Figur 4 gezeigt in der Durchgangsöffnung 20 zusätzlich zur Sicherungsfläche 22 eine Zentrierfläche 24 auf, welche koaxial zur Sicherungsfläche 22 ausgebildet ist, welche aber einen kleineren Durchmesser aufweist als die Sicherungsfläche 22. Die Funktion dieser zylindrischen Zentrierfläche 24 ist es, die Gewindestange 1 mitsamt der darauf sitzenden Mutter 30 in Bezug auf die Sicherungsfläche 22 so genau zu zentrieren, dass selbst bei Schrägstellung der Gewindestange 1 ein Aufsitzen der Bundkrone 44 auf der Auflagefläche 21 des Sicherungskörpers 10 geometrisch ausgeschlossen ist (vgl. Figuren 6 und 7). Somit fädelt die Mutter 30 beim Anziehen auf jeden Fall in die Durchgangsöffnung 20 ein, die Kontaktfläche 42 und die Sicherungsfläche 22 werden korrekt zueinander positioniert und somit ist ein ungewolltes Öffnen der Mutternteile 31, 32 vermieden.

Zwischen der Zentrierfläche 24 und der Sicherungsfläche 22 des Sicherungskörpers 10 ist wie insbesondere in Figur 4 gezeigt eine Übergangsfläche 23 vorgesehen, wobei der Öffnungswinkel α₂₃ der Übergangsfläche 23 wie in Figur 3 angedeutet grösser ist als der Öffnungswinkel α₂₂ der Sicherungsfläche 22. Diese Übergangsfläche 23 ermöglicht es, die Zentrierfläche 24 bei zugleich steiler Sicherungsfläche 22 mit einem kleinen Durchmesser auszugestalten und somit eine besonders gute Zentrierwirkung bei zugleich guter Sicherungswirkung zu erzielen.

Wie Figur 5 zeigt, sind die Mutter 30 und der Sicherungskörper 10 so dimensioniert, dass im vollständig angezogenen Zustand, das heisst wenn die Anschlagfläche 41 auf der Auflagefläche 21 aufliegt, einerseits die Positionierungsfläche 43 vom Sicherungskörper 10 beabstandet ist und andererseits die Übergangsfläche 23 von der Mutter 30 beabstandet ist. Hierdurch wird gewährleistet, dass die Sicherung der beiden Mutternteile 31, 32 auch in diesem Zustand ausschliesslich über den Kontakt zwischen der Sicherungsfläche 22 und der Kontaktfläche 42 erfolgt.

Die Fläche 22, 23, 42 und/oder 43 ist vorzugsweise ringförmig oder ringsegmentförmig, insbesondere konusförmig oder konussegmentförmig ausgebildet.

## Patentansprüche

1. Befestigungsanordnung mit
einer Schnellspannmutter (30), welche zwei Mutternteile (31, 32) aufweist, wobei die Mutternteile (31, 32) jeweils eine Nut (33, 34) zur Aufnahme einer Gewindestange (1) aufweisen, und
einem Sicherungskörper (10) mit zumindest einer Durchgangsöffnung (20) zum Sichern der Schnellspannmutter (30) an der Gewindestange (1), wobei der Sicherungskörper (10) in der Durchgangsöffnung (20) eine Sicherungsfläche (22) zum Anpressen der Mutternteile (31, 32) an die Gewindestange (1) sowie eine Zentrierfläche (24) zum Zentrieren der Gewindestange (1) in der Durchgangsöffnung (20) aufweist,
wobei der Sicherungskörper (10) in der Durchgangsöffnung (20) eine Übergangsfläche (23) aufweist, die sich an die Sicherungsfläche (22) und an die Zentrierfläche (24) anschliesst, und die zwischen der Sicherungsfläche (22) und der Zentrierfläche (24) verläuft,
**dadurch gekennzeichnet,**
**dass** die Schnellspannmutter (30) zumindest eine als radial verlaufende Ebene ausgebildete Anschlagfläche (41) aufweist, welche ein axiales Einziehen der Schnellspannmutter (30) in die Durchgangsöffnung (20) begrenzt, und
**dass** die Übergangsfläche (23) von den Mutternteilen (31, 32) beabstandet ist, wenn die Schnellspannmutter (30) mit der Anschlagfläche (41) am Sicherungskörper (10) anliegt und die Sicherungsfläche (22) die Mutternteile (31, 32) an die Gewindestange (1) anpresst.

2. Befestigungsanordnung nach Anspruch 1,
**dadurch gekennzeichnet,**
**dass** die Sicherungsfläche (22), die Übergangsfläche (23) und die Zentrierfläche (24) ringsegmentförmig oder ringförmig ausgebildet sind.

3. Befestigungsanordnung nach einem der vorstehenden Ansprüche,
**dadurch gekennzeichnet,**
**dass** die Sicherungsfläche (22) zumindest bereichsweise einen kleineren Öffnungswinkel aufweist als die Übergangsfläche (23).

4. Befestigungsanordnung nach einem der vorstehenden Ansprüche,
**dadurch gekennzeichnet,**
**dass** die Mutternteile (31, 32) für einen Angriff der Sicherungsfläche (22) jeweils zumindest einen Kragen (61 bzw. 62) aufweisen.

5. Befestigungsanordnung nach Anspruch 4,
**dadurch gekennzeichnet,**
**dass** der zumindest eine Kragen (61 bzw. 62) eine Kontaktfläche (42) für einen Kontakt mit der Sicherungsfläche (22) des Sicherungskörpers (10) sowie eine winklig zur Kontaktfläche angeordnete Positionierungsfläche (43) aufweist.

6. Befestigungsanordnung nach Anspruch 4 oder 5,
**dadurch gekennzeichnet,**
**dass** die Mutternteile (31, 32) jeweils zwei Kragen (61, 63 bzw. 62, 64) aufweisen, die auf gegenüberliegenden Seiten des jeweiligen Mutternteils (31, 32) angeordnet sind.

7. Befestigungsanordnung nach einem der vorstehenden Ansprüche,
**dadurch gekennzeichnet,**
**dass** der Sicherungskörper (10) einen Schlitz (13) aufweist, der zum Einführen der Gewindestange (1) in die Durchgangsöffnung (20) von der Aussenseite des Sicherungskörpers (10) in die Durchgangsöffnung (20) reicht.

8. Befestigungsanordnung nach einem der vorstehenden Ansprüche,
**dadurch gekennzeichnet,**
**dass** der Sicherungskörper (10) eine weitere Durchgangsöffnung (20') zum Sichern einer weiteren Schnellspannmutter (30') mit zwei Mutternteilen an der Gewindestange (1) aufweist,
wobei die Durchgangsöffnung (20) und die weitere Durchgangsöffnung (20') miteinander fluchten.

9. Befestigungsanordnung nach einem der vorstehenden Ansprüche,
**dadurch gekennzeichnet,**
**dass** die beiden Mutternteile (31, 32) gelenkig miteinander verbunden sind.

10. Befestigungsanordnung nach einem der vorstehenden Ansprüche,
**dadurch gekennzeichnet,**
**dass** sie eine Gewindestange (1) aufweist, die durch die Durchgangsöffnung (20) durchgeführt ist, wobei der Sicherungskörper (10) mit seiner Sicherungsfläche (22) die beiden Mutternteile (31, 32) radial an die Gewindestange (1) anpresst.

## Claims

1. Fastening arrangement, comprising
a quick-locking nut (30) having two nut parts (31, 32), the nut parts (31, 32) each having a groove (33, 34) for receiving a threaded rod (1), and
a locking element (10) with at least one through opening (20) for securing the quick-locking nut (30) to the threaded rod (1), the locking element (10) being provided in the through opening (20) with a locking surface (22) for pressing the nut parts (31, 32) against the threaded rod (1) and with a centring surface (24) for centring the threaded rod (1) in the through opening (20) and
the locking element (10) being provided in the through opening (20) with a transition surface (23) adjoining the locking surface (22) and the centring surface (24) and extending between the locking surface (22) and the centring surface (24), **characterised in that**
the quick-locking nut (30) has at least one stop surface (41) designed as a radially extending plane and limiting the axial pulling of the quick-locking nut (30) into the through opening (20) and
that the transition surface (23) is disposed at a distance from the nut parts (31, 32) when the quick-locking nut (30) bears against the locking element (10) by means of the stop surface (41) and the locking surface (22) presses the nut parts (31, 32) against the threaded rod (1).

2. Fastening arrangement according to claim 1, **characterised in that** the locking surface (22), the transition surface (23) and the centring surface (24) are designed as ring segments or rings.

3. Fastening arrangement according to one of the preceding claims, **characterised in that** the locking surface (22) has a smaller opening angle than the transition surface (23), at least in some areas.

4. Fastening arrangement according to one of the preceding claims, **characterised in that** the nut parts (31, 32) each have at least one collar (61 or 62) for engaging the locking surface (22).

5. Fastening arrangement according to claim 4, **characterised in that** the at least one collar (61 or 62) has a contact surface (42) for contact with the locking surface (22) of the locking element (10) and a positioning surface (43) arranged at an angle to the contact surface.

6. Fastening arrangement according to claim 4 or claim 5, **characterised in that** the nut parts (31, 32) each have two collars (61, 63 or 62, 64) arranged on opposite sides of the respective nut part (31, 32).

7. Fastening arrangement according to one of the preceding claims, **characterised in that** the locking element (10) has a slot (13) extending from the outer face of the locking element (10) into the through opening (20) for the insertion of the threaded rod (1) into the through opening (20).

8. Fastening arrangement according to one of the preceding claims, **characterised in that** the locking element (10) has a further through opening (20') for securing a further quick-locking nut (30') with two nut parts to the threaded rod (1), the through opening (20) and the further through opening (20') being aligned with one another.

9. Fastening arrangement according to one of the preceding claims, **characterised in that** the two nut parts (31, 32) are hinged together.

10. Fastening arrangement according to one of the preceding claims, **characterised in that** it has a threaded rod (1) passed through the through opening (20), the locking element (10) pressing the two nut parts (31, 32) radially against the threaded rod (1) by means of its locking surface (22).

## Revendications

1. Agencement de fixation comportant :
un écrou à serrage rapide (30) comportant deux parties d'écrou (31, 32), les parties d'écrou (31, 32) comportant chacune une rainure (33, 34) pour recevoir une tige filetée (1), et
un élément de blocage (10) ayant au moins une ouverture traversante (20) pour bloquer l'écrou à serrage rapide (30) sur la tige filetée (1), l'élément de blocage (10) dans l'ouverture traversante (20) comportant une surface de blocage (22) pour presser les parties d'écrou (31, 32) sur la tige filetée (1) ainsi qu'une surface de centrage (24) pour centrer la tige filetée (1) dans l'ouverture traversante (20),
dans lequel l'élément de blocage (10) dans l'ouverture traversante (20) comporte une surface de transition (23) adjacente à la surface de blocage (22) et à la surface de centrage (24) et s'étendant entre la surface de blocage (22) et la surface de centrage (24),
**caractérisé en ce que**
l'écrou à serrage rapide (30) comporte au moins une surface de butée (41) formée comme un plan s'étendant radialement, laquelle surface de butée limite un enfoncement axial de l'écrou à serrage rapide (30) dans l'ouverture traversante (20), et
la surface de transition (23) est espacée des parties d'écrou (31, 32) lorsque l'écrou à serrage rapide (30) est en contact avec la surface de butée (41) sur l'élément de blocage (10) et la surface de blocage (22) presse les parties d'écrou (31, 32) sur la tige filetée (1).

2. Agencement de fixation selon la revendication 1,
**caractérisé en ce que**
la surface de blocage (22), la surface de transition (23) et la surface de centrage (24) sont réalisées sous forme de segments annulaires ou d'anneau.

3. Agencement de fixation selon l'une des revendications précédentes,
**caractérisé en ce que**
la surface de blocage (22) a, au moins par endroits, un angle d'ouverture inférieur à la surface de transition (23).

4. Agencement de fixation selon l'une des revendications précédentes,
**caractérisé en ce que**
les parties d'écrou (31, 32) comportent respectivement au moins une collerette (61 ou 62) pour s'engager avec la surface de blocage (22).

5. Agencement de fixation selon la revendication 4,
**caractérisé en ce que**
la au moins une collerette (61 ou 62) comporte une surface de contact (42) pour venir en contact avec la surface de blocage (22) de l'élément de blocage (10) ainsi qu'une surface de positionnement (43) agencée à un certain angle par rapport à la surface de contact.

6. Agencement de fixation selon la revendication 4 ou 5,
**caractérisé en ce que**
les parties d'écrou (31, 32) comportent respectivement deux collerettes (61, 63 ou 62, 64) agencées sur des côtés opposés de chaque partie d'écrou (31, 32).

7. Agencement de fixation selon l'une des revendications précédentes,
**caractérisé en ce que**
l'élément de blocage (10) comporte une fente (13) s'étendant dans l'ouverture de passage (20) pour introduire la tige filetée (1) dans l'ouverture traversante (20) à partir du côté extérieur de l'élément de blocage (10).

8. Agencement de fixation selon l'une des revendications précédentes,
**caractérisé en ce que**
l'élément de blocage (10) comporte une ouverture traversante supplémentaire (20') pour bloquer un écrou à serrage rapide supplémentaire (30') avec deux parties d'écrou sur la tige filetée (1),
dans lequel l'ouverture traversante (20) et l'ouverture traversante supplémentaire (20') sont alignées l'une sur l'autre.

9. Agencement de fixation selon l'une des revendications précédentes,
**caractérisé en ce que**
les deux parties d'écrou (31, 32) sont reliées l'une à l'autre de manière articulée.

10. Agencement de fixation selon l'une des revendications précédentes,
**caractérisé en ce**
**qu'**il comporte une tige filetée (1) passant à travers l'ouverture traversante (20), dans lequel l'élément de blocage (10) ayant une surface de blocage (22) presse radialement les deux parties d'écrou (31, 32) contre la tige filetée (1).
